# EUROPEAN PATENT APPLICATION

(11) **EP 4 465 128 A1**
(43) Date of publication of application: **20.11.2024**
(21) Application number: 22920166.0
(22) Date of filing: 11.01.2022
(51) Int. Cl.: G03B 19/06, G03B 15/00, G03B 19/07

(54) **IMAGING SYSTEM, IMAGING DEVICE, IMAGING METHOD, AND RECORDING MEDIUM**

(71) Applicant: NEC Corporation, 108-8001 Tokyo (JP)
(72) Inventor: YOSHIMI, Kosuke, Tokyo 108-8001 (JP)
(74) Representative: Betten & Resch
(86) International application number: PCT/JP2022/000532
(87) International publication number: WO 2023/135640

(57) **Abstract**

An imaging system includes: a first camera with a first focal length; a second camera with a second focal length; a first mirror disposed to correspond to both the first camera and the second camera; and a first adjustment unit that adjusts an optical positional relation between the first camera or the second camera and the first mirror, in accordance with which of the first camera and the second camera is used to image a target. According to such an imaging system, it is possible to properly image targets located at differing distances.

## Description

### Technical Field

This disclosure relates to technical fields of an imaging system, an imaging apparatus, an imaging method, and a recording medium.

### Background Art

A known system of this type images a living body with a plurality of cameras. For example, Patent Literature 1 discloses a technique/technology of imaging an iris of a target person iris by using three infrared cameras arranged at regular intervals in a vertical direction. Patent Literature 2 discloses a technique/technology of imaging a face of an authentication target person by using cameras with different focal lengths.

As another related art, Patent Literature 3 discloses changing an imaging direction of a narrow camera by using a reflecting mirror in an imaging apparatus including a wide camera and the narrow camera.

### Citation List

### Patent Literature

Patent Literature 1: International Publication No. WO2021/090366
Patent Literature 2: International Publication No. WO2020/255244
Patent Literature 3: JP2009-104599A

### Summary

### Technical Problem

This disclosure aims to improve the techniques/technologies disclosed in Citation List.

### Solution to Problem

An imaging system according to an example aspect of this disclosure includes: a first camera with a first focal length; a second camera with a second focal length; a first mirror disposed to correspond to both the first camera and the second camera; and a first adjustment unit that adjusts an optical positional relation between the first camera or the second camera and the first mirror, in accordance with which of the first camera and the second camera is used to image a target.

An imaging apparatus according to an example aspect of this disclosure includes: a first camera with a first focal length; a second camera with a second focal length; a first mirror disposed to correspond to both the first camera and the second camera; and a first adjustment unit that adjusts an optical positional relation between the first camera or the second camera and the first mirror, in accordance with which of the first camera and the second camera is used to image a target.

An imaging method according to an example aspect of this disclosure is an imaging method that is executed by at least one computer, the imaging method controlling an imaging system including: a first camera with a first focal length; a second camera with a second focal length; and a first mirror disposed to correspond to both the first camera and the second camera, the imaging method including: adjusting an optical positional relation between the first camera or the second camera and the first mirror, in accordance with which of the first camera and the second camera is used to image a target.

A recording medium according to an example aspect of this disclosure is a recording medium on which a computer program that allows at least one computer to execute an imaging method is recorded, the imaging method controlling an imaging system including: a first camera with a first focal length; a second camera with a second focal length; and a first mirror disposed to correspond to both the first camera and the second camera, the imaging method including: adjusting an optical positional relation between the first camera or the second camera and the first mirror, in accordance with which of the first camera and the second camera is used to image a target.

### Brief Description of Drawings

[FIG. 1] FIG. 1 is a block diagram illustrating a hardware configuration of an imaging system according to a first example embodiment.
[FIG. 2] FIG. 2 is a block diagram illustrating a functional configuration of the imaging system according to the first example embodiment.
[FIG. 3] FIG. 3 is a flowchart illustrating a flow of an imaging operation of the imaging system according to the first example embodiment.
[FIG. 4] FIG. 4 is a block diagram illustrating a functional configuration of an imaging system according to a modified example of the first example embodiment.
[FIG. 5] FIG. 5 is a flowchart illustrating a flow of an imaging operation of the imaging system according to the modified example of the first example embodiment.
[FIG. 6] FIG. 6 is a side view illustrating a viewing angle origin of a first camera and a second camera in an imaging system according to a second example embodiment.
[FIG. 7] FIG. 7 is a side view illustrating a rotation drive control of a first mirror by an imaging system according to a third example embodiment.
[FIG. 8] FIG. 8 is a side view illustrating arrangement variations of the second camera.
[FIG. 9] FIG. 9 is a front view illustrating an operation example of a drive unit that moves in parallel the first camera and the second camera.
[FIG. 10] FIG. 10 is a side view illustrating a configuration example of a drive unit that rotates and moves the first camera and the second camera.
[FIG. 11] FIG. 11 is a top view illustrating a configuration example of the drive unit that rotates and moves the first camera and the second camera.
[FIG. 12] FIG. 12 is a front view illustrating a first combination example of the cameras.
[FIG. 13] FIG. 13 is a front view illustrating a second combination example of the cameras.
[FIG. 14] FIG. 14 is a front view illustrating a third combination example of the cameras.
[FIG. 15] FIG. 15 is a front view illustrating a fourth combination example of the cameras.
[FIG. 16] FIG. 16 is a block diagram illustrating a functional configuration of an imaging system according to a fifth example embodiment.
[FIG. 17] FIG. 17 is a conceptual diagram illustrating remote authentication and proximity authentication by the imaging system according to the fifth example embodiment.
[FIG. 18] FIG. 18 is a flowchart illustrating a flow of an authentication operation of the imaging system according to the fifth example embodiment.
[FIG. 19] FIG. 19 is a conceptual diagram illustrating each phase and processing content in an imaging system according to a sixth example embodiment.
[FIG. 20] FIG. 20 is a block diagram illustrating a functional configuration of an imaging system according to a seventh example embodiment.
[FIG. 21] FIG. 21 is a front view illustrating an output example of guidance information by the imaging system according to the seventh example embodiment.
[FIG. 22] FIG. 22 is a front view illustrating an output example of the guidance information corresponding to imaging timing in an imaging system according to an eighth example embodiment.
[FIG. 23] FIG. 23 is a front view illustrating an output example of the guidance information corresponding to other than the imaging timing in the imaging system according to the eighth example embodiment.
[FIG. 24] FIG. 24 is a block diagram illustrating a functional configuration of an imaging system according to a ninth example embodiment.
[FIG. 25] FIG. 25 is a front view illustrating an arrangement example of the imaging system according to the ninth example embodiment.
[FIG. 26] FIG. 26 is a flowchart illustrating a flow of an imaging operation of the imaging system according to the ninth example embodiment.
[FIG. 27] FIG. 27 is a side view illustrating a viewing angle origin of a third camera and a fourth camera in an imaging system according to a tenth example embodiment.
[FIG. 28] FIG. 28 is a front view illustrating the viewing angle origin of each camera in the imaging system according to the tenth example embodiment.

### Description of Example Embodiments

Hereinafter, an imaging system, an imaging apparatus, an imaging method, and a recording medium according to example embodiments will be described with reference to the drawings.

### <First Example Embodiment>

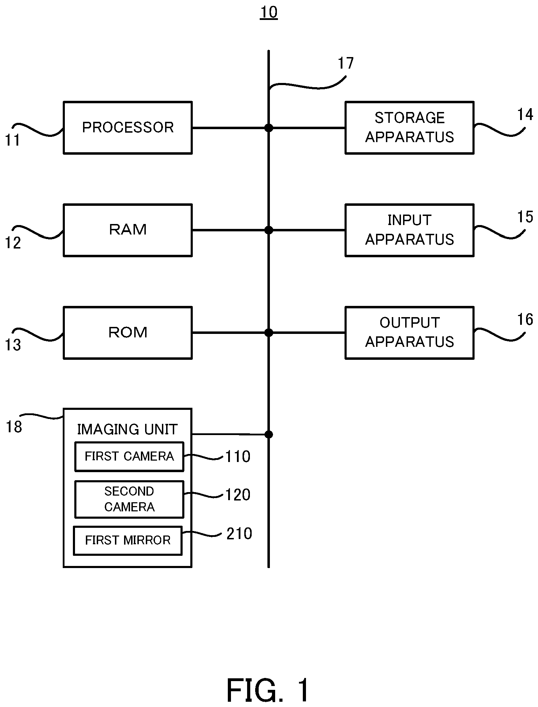

An imaging system according to a first example embodiment will be described with reference to FIG. 1 to FIG. 3.

### (Hardware Configuration)

First, with reference to FIG. 1, a hardware configuration of the imaging system according to the first example embodiment will be described. FIG. 1 is a block diagram illustrating the hardware configuration of the imaging system according to the first example embodiment.

As illustrated in FIG. 1, an imaging system 10 according to the first example embodiment includes a processor 11, a RAM (Random Access Memory) 12, a ROM (Read Only Memory) 13, and a storage apparatus 14. The imaging system 10 may further include an input apparatus 15 and an output apparatus 16. Furthermore, the imaging system 10 includes an imaging unit 18. The processor 11, the RAM 12, the ROM 13, the storage apparatus 14, the input apparatus 15, the output apparatus 16, and the imaging unit 18 are connected to each other through a data bus 17.

The processor 11 reads a computer program. For example, the processor 11 is configured to read a computer program stored by at least one of the RAM 12, the ROM 13, and the storage apparatus 14. Alternatively, the processor 11 may read a computer program stored in a computer-readable recording medium, by using a not-illustrated recording medium reading apparatus. The processor 11 acquire (i.e., may read) a computer program from a not-illustrated apparatus disposed outside the imaging system 10, through a network interface. The processor 11 controls the RAM 12, the storage apparatus 14, the input apparatus 15, and the output apparatus 16 by executing the read computer program. Especially in the present example embodiment, when the processor 11 executes the read computer program, a functional block for performing processing for capturing an image of a target, is realized in the processor 11. That is, the processor 11 may function as a controller for executing each control in the imaging system 10.

The processor 11 may be configured as, for example, a CPU (Central Processing Unit), a GPU (Graphics Processing Unit), a FPGA (Field-Programmable Gate Array), a DSP (Demand-Side Platform), or an ASIC (Application Specific Integrated Circuit). The processor 11 may be one of them, or may use a plurality of them in parallel.

The RAM 12 temporarily stores the computer program to be executed by the processor 11. The RAM 12 temporarily stores data that are temporarily used by the processor 11 when the processor 11 executes the computer program. The RAM 12 may be, for example, a D-RAM (Dynamic Random Access Memory) or a SRAM (Static Random Access Memory). Furthermore, another type of volatile memory may also be used instead of the RAM 12.

The ROM 13 stores the computer program to be executed by the processor 11. The ROM 13 may otherwise store fixed data. The ROM 13 may be, for example, a P-ROM (Programmable Read Only Memory) or an EPROM (Erasable Read Only Memory). Furthermore, another type of nonvolatile memory may also be used instead of the ROM 13.

The storage apparatus 14 stores the data that are stored by the imaging system 10 for a long time. The storage apparatus 14 may operate as a temporary/transitory storage apparatus of the processor 11. The storage apparatus 14 may include, for example, at least one of a hard disk apparatus, a magneto-optical disk apparatus, a SSD (Solid State Drive), and a disk array apparatus.

The input apparatus 15 is an apparatus that receives an input instruction from a user of the imaging system 10. The input apparatus 15 may include, for example, at least one of a keyboard, a mouse, and a touch panel. The input apparatus 15 may be configured as a portable terminal such as a smartphone and a tablet. The input apparatus 15 may be an apparatus that allows audio input/voice input, including a microphone, for example.

The output apparatus 16 is an apparatus that outputs information about the imaging system 10 to the outside. For example, the output apparatus 16 may be a display apparatus (e.g., a display) that is configured to display the information about the imaging system 10. The output apparatus 16 may be a speaker or the like that is configured to audio-output the information about the imaging system 10. The output apparatus 16 may be configured as a portable terminal such as a smartphone and a tablet. The output apparatus 16 may be an apparatus that outputs information in a format other than an image. For example, the output apparatus 16 may be a speaker that audio-outputs the information about the imaging system 10.

The imaging unit 18 is configured to capture the image of the target. The imaging unit 18 includes a first camera 110, a second camera 120, and a first mirror 210.

The first camera 110 and the second camera 120 are cameras disposed at positions where the image of the target can be captured. The target here is not limited to a human being, but may include an animal such as a dog, a snake, a robot, or the like. The first camera 110 and the second camera 120 are cameras with different focal lengths from each other. Specifically, the first camera 110 has a first focal length, and the second camera 120 has a second focal length. The first camera 110 and the second camera have different viewing angles from each other. The first camera 110 and the second camera 120 capture an entire image of the target, or may image a part of the target. The first camera 110 and the second camera 120 may image different parts of the target. For example, the first camera 110 may be configured to capture an image of a face of the target (hereinafter referred to as a "face image" as appropriate), and the second camera 120 may be configured to capture an image including an eye(s) of the target (hereinafter referred to as an "eye image" as appropriate). The first camera 110 and the second camera 120 may be cameras that capture a still image, or cameras that capture a video. The first camera 110 and the second camera 120 may be configured as visible light cameras or as near infrared cameras. The first camera 110 and the second camera 120 may be configured as cameras of the same type. For example, both the first camera 110 and the second camera 120 may be configured as visible light cameras, or both the first camera 110 and the second camera 120 may be configured as near infrared cameras. In addition, the first camera 110 and the second camera 120 may be configured as different types of cameras. For example, the first camera 110 may be configured as a visible light camera and the second camera may be configured as a near infrared camera. A plurality of first cameras 110 and a plurality of second cameras 120 may be provided. The first camera 110 and the second camera 120 may have a function of automatically turning off in a case where the cameras do not capture an image. In this case, for example, a part having a short life such as a liquid lens and a motor, may be preferentially turned off.

The first mirror 210 is a mirror configured to reflect light (specifically, light used when the first camera 110 and the second camera 120 perform imaging). The first mirror 210 is disposed to correspond to both the first camera 110 and the second camera 120. That is, each of the first camera 110 and the second camera 120 is configured to image the target through the first mirror 210. Specifically, the first camera 110 performs the imaging by using light entering through the first mirror 210, and the second camera 120 also performs the imaging by using the light entering through the first mirror 210. The first camera 110 and the second camera 120, and the first mirror 210 are configured to adjust an optical positional relation with each other. The "optical positional relation" herein means a relative positional relation that may effect/influence an optical system including the first camera 110, the second camera 120, and the first mirror 210, and it may be adjusted by moving (e.g., transferring, or rotating) any of the first camera 110, the second camera 120, and the first mirror 210, for example. Furthermore, not any one, but a plurality of the first camera 110, the second camera 120, and the first mirror 210 may be moved simultaneously. For example, the first camera 110 may be moved while the first mirror 110 is rotated. This adjustment of the optical positional relation will be described in detail later.

Although FIG. 1 illustrates an example of the imaging system 10 including a plurality of apparatuses, all or a part of the functions thereof may be realized or implemented with a single apparatus (imaging apparatus). For example, the imaging apparatus may include only the processor 11, the RAM 12, and the ROM 13, and the imaging unit 18, and the other components (i.e., the storage apparatus 14, the input apparatus 15, the output apparatus 16) may be provided in an external apparatus connected to the imaging apparatus, for example. In addition, in the imaging apparatus, a part of an arithmetic function may be realized by an external apparatus (e.g., an external server or cloud, etc.).

### (Functional Configuration)

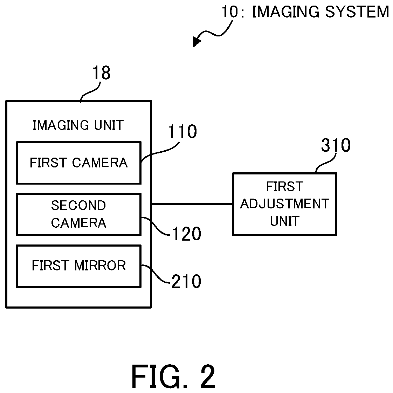

Next, with reference to FIG. 2, a functional configuration of the imaging system 10 according to the first example embodiment will be described. FIG. 2 is a block diagram illustrating the functional configuration of the imaging system according to the first example embodiment.

The imaging system 10 according to the first example embodiment is configured as a system that captures the image of the target. More specifically, the imaging system 10 is configured to image a moving target (e.g., a pedestrian, etc.). The application of the image captured by the imaging system 10 is not particularly limited, but the image may be used in biometric authentication, for example. For example, the imaging system 10 may be configured as a part of an authentication system that performs walk-through authentication in which a walking target is imaged to perform the biometric authentication. Alternatively, the imaging system 10 may be configured as a part of an authentication system that images a standing target to perform the biometric authentication.

As illustrated in FIG. 2, the imaging system 10 according to the first example embodiment includes, as components for realizing the functions thereof, the imaging unit 18 described above, and a first adjustment unit 310. The first adjustment unit 310 may be a processing block realized or implemented by the processor 11 (see FIG. 1), for example.

The first adjustment unit 310 is configured to adjust the optical positional relation between the first camera 110 or the second camera 120 and the first mirror 210. More specifically, the first adjustment unit 310 adjusts the optical positional relation between the first camera 110 and the first mirror 210, when the imaging is performed by the first camera 110. As a result, the first camera 110 is ready to image the target. The first adjustment unit 310 adjusts the optical positional relation between the second camera 120 and the first mirror 210, when the imaging is performed by the second camera 120. As a result, the second camera 120 is ready to image the target. The first adjustment unit 310 may be configured to adjust the respective optical positional relation, for example, by driving at least one or more of the first camera 110, the second camera 120, and the first mirror 210 with a drive unit including an actuator or the like.

### (Flow of Operation)

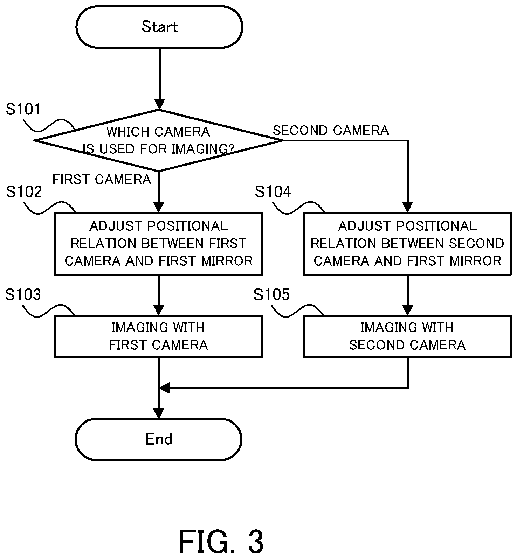

Next, with reference to FIG. 3, a flow of an imaging operation of the imaging system 10 according to the first example embodiment (i.e., an operation when capturing the image of the target) will be described. FIG. 3 is a flowchart illustrating the flow of the imaging operation of the imaging system according to the first example embodiment.

As illustrated in FIG. 3, when the imaging operation by the imaging system 10 according to the first example embodiment is started, first, the first adjustment unit 310 determines which of the first camera 110 and the second camera 120 is used to image the target (step S101). The first adjustment unit 310 may determine which of the first camera 110 and the second camera 120 is used to image the target, for example, on the basis of the positional relation between the first camera 110 or the second camera 120 and the target. For example, in a case where the target is at a position corresponding to the first focal length, the first adjustment unit 310 may determine that the first camera 110 is used for the imaging. Similarly, in a case where the target is at a position corresponding to the second focal length, the first adjustment unit 310 may determine that the second camera 120 is used for the imaging. Alternatively, the first adjustment unit 310 may which of the first camera 110 and the second camera 120 is used to image the target, on the basis of information inputted by the user or the like.

When it is determined that the first camera 110 is used for the imaging (the step S101: First camera), the first adjustment unit 310 adjusts the optical positional relation between the first camera 110 and the first mirror 210 (step S102). Then, while the optical positional relation is adjusted, the first camera 110 performs the imaging (step S103).

On the other hand, when it is determined that the second camera 120 is used for the imaging (the step S101: Second camera), the first adjustment unit 310 adjusts the optical positional relation between the second camera 120 and the first mirror 210 (step S104). Then, while the optical positional relation is adjusted, the second camera 120 performs the imaging (step S105).

### (Modified Example)

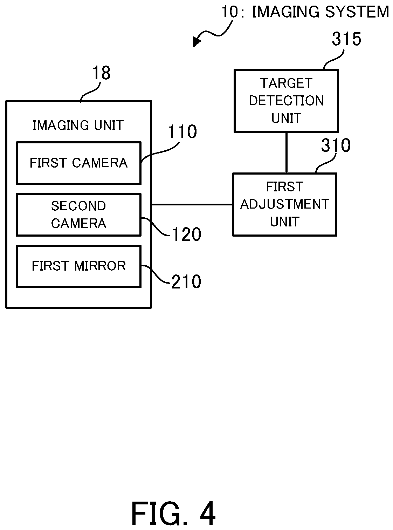

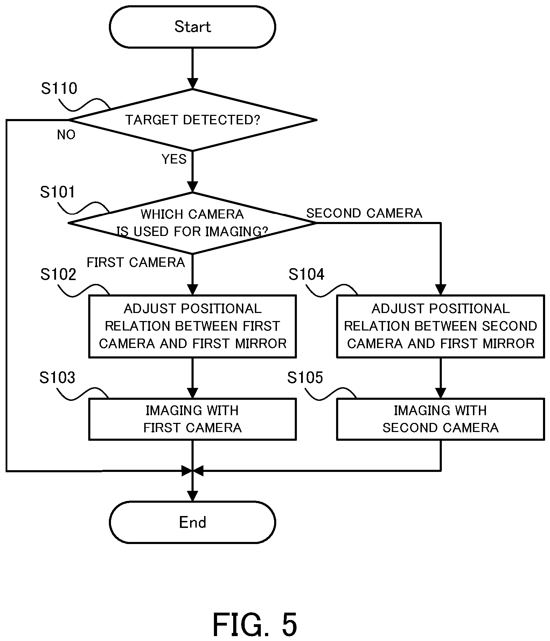

Next, a modified example of the imaging system 10 according to the first example embodiment described above will be described with reference to FIG. 4 and FIG. 5. FIG. 4 is a block diagram illustrating a functional configuration of the imaging system according to the modified example of the first example embodiment. FIG. 5 is a flowchart illustrating a flow of an imaging operation of the imaging system according to the modified example of the first example embodiment. In FIG. 4 and FIG. 5, the same components or steps as those illustrated in FIG. 2 and FIG. 3 carry the same reference numerals.

As illustrated in FIG. 4, the imaging system 10 according to the modified example of the first example embodiment includes, as components for realizing the functions thereof, the imaging unit 18, the first adjustment unit 310, and a target detection unit 315. That is, the imaging system 10 according to the modified example further includes the target detection unit 315 in addition to the configuration in the first example embodiment described above (see FIG. 2). The target detection unit 310 may be a processing block realized or implemented by the processor 11 (see FIG. 1), for example.

The target detection unit 315 is configured to detect the target located around the first camera 110 and the second camera 120. More specifically, the target detection unit 315 is configured to detect the target who could be an imaging target of the first camera 110 and the second camera 120 (e.g., the target approaching the first camera 110 and the second camera 120, and the target located within a predetermined distance from the first camera 110 and the second camera 120, etc.). The target detection unit 315 may detect the target in accordance with a detection result of a position sensor or a distance sensor, for example. Alternatively, the target detection unit 315 may detect the target on the basis of an imaging result by a camera that is different from the first camera 110 and the second camera 120 (e.g., an overhead camera with a wider imaging range than those of the first camera 110 and the second camera 120, etc.). The target detection unit 315 may be configured to detect a positional relation between the target and the first camera 110 or the second camera 120. This positional relation may be used, for example, to determine which of the first camera 110 and the second camera 120 is used for the imaging. A detection result by the target detection unit 315 is configured to be outputted to the first adjustment unit 310.

As illustrated in FIG. 5, when the imaging operation by the imaging system 10 according to the modified example of the first example embodiment is started, first, the target detection unit 315 detects the presence of the target who could be the imaging target of the first camera 110 and the second camera 120 (step S110). When the target is not detected by the target detection unit 315 (the step S110: NO), the subsequent steps may be omitted.

On the other hand, when the target is detected by the target detection unit 315 (the step S110: YES), the first adjustment unit 310 determines which of the first camera 110 and the second camera 120 is used to image the target (step S101). At this time, the first adjustment unit 310 may determine which of the first camera 110 and the second camera 120 is used to image the target, on the basis of the detection result of the target detection unit 315. For example, in a case where it is detected that the target is at a position corresponding to the first focal length, the first adjustment unit 310 may determine that the first camera 110 is used for the imaging. Similarly, in a case where it is detected that the target is at a position corresponding to the second focal length, the first adjustment unit 310 may determine that the second camera 120 is used for the imaging.

When it is determined that the first camera 110 is used for the imaging (the step S101: First camera), the first adjustment unit 310 adjusts the optical positional relation between the first camera 110 and the first mirror 210 (step S102). Then, while the optical positional relation is adjusted, the first camera 110 performs the imaging (step S103).

On the other hand, when it is determined that the second camera 120 is used for the imaging (the step S101: Second camera), the first adjustment unit 310 adjusts the optical positional relation between the second camera 120 and the first mirror 210 (step S104). Then, while the optical positional relation is adjusted, the second camera 120 performs the imaging (step S105).

### (Technical Effect)

Next, a technical effect obtained by the imaging system 10 according to the first example embodiment will be described.

As described in FIG. 1 to FIG. 3, in the imaging system 10 according to the first example embodiment, depending on which of the first camera 110 and the second camera 120 is used to image the target, the optical positional relation between the first camera 110 or the second camera 120 and the first mirror 210 is adjusted. In this way, each of the first camera 110 and the second camera 120 is capable of performing the imaging through the first mirror 210. In other words, it is possible to image the target located at a different focal length, through the common mirror.

### <Second Example Embodiment>

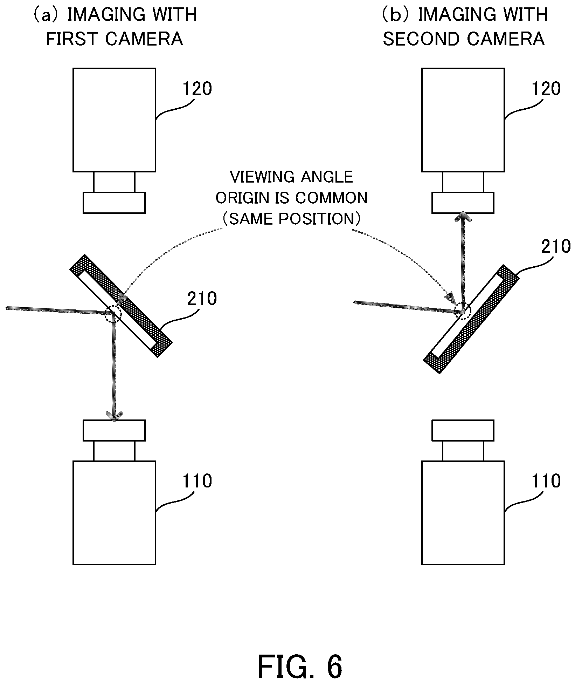

The imaging system 10 according to a second example embodiment will be described with reference to FIG. 6. The second example embodiment is partially different from the first example embodiment only in the configuration, and may be the same as the first example embodiment in the other parts. For this reason, a part that is different from the first example embodiment will be described in detail below, and a description of the other overlapping parts will be omitted as appropriate.

### (Viewing Angle Origin)

First, with reference to FIG. 6, a viewing angle origin in the imaging system 10 according to the second example embodiment will be described. FIG. 6 is a side view illustrating the viewing angle origin of the first camera and the second camera in the imaging system according to the second example embodiment.

As illustrated in FIG. 6, in the imaging system 10 according to the second example embodiment, the first mirror 210 is disposed between the first camera 110 and the second camera 120. When the imaging is performed by the first camera 110, the first mirror 210 is directed toward the first camera 110, and light enters the first camera 110 through the first mirror 210 (see FIG. 6(a)). On the other hand, when the imaging is performed by the second camera 120, the first mirror 210 f is directed toward the second camera 120, and light enters the second camera 120 through the first mirror 210 (see FIG. 6(b)).

Here, in both cases where the imaging is performed by the first camera 110 and the imaging is performed by the second camera 120, an intersection between an optical axis of each of the cameras and a mirror surface of the first mirror 210 is a common position. In the present example embodiment, the above intersection is referred to as a "viewing angle origin". For example, in a case of rotating (changing an angle of) the first mirror 210 as illustrated, a position on the mirror surface serving as a rotation center is the viewing angle origin that is common to the both cameras. It is ideal that the viewing angle origin is common (coincident) between the first camera 110 and the second camera 120 as described above, but even when there is a slight deviation between the respective viewing angle origins, a technical effect according to the present example embodiment described below is obtained.

### (Technical Effect)

Next, a technical effect obtained by the imaging system 10 according to the second example embodiment will be described.

As described in FIG. 6, in the imaging system 10 according to the second example embodiment, the first camera 110 and the second camera 120 perform the imaging through the common viewing angle origin. In this way, it is possible to make a common path for guiding the light to the first camera 110 and the second camera 120, and it is thus possible to simplify the configuration of the imaging unit 18. In addition, for example, in a case where it is required to guide a line of sight to image the eye(s) of the target, it is sufficient to guide the line of sight with respect to the common one viewing angle origin even in a situation where the imaging is performed by any one of the first camera 110 and the second camera 120.

### <Third Example Embodiment>

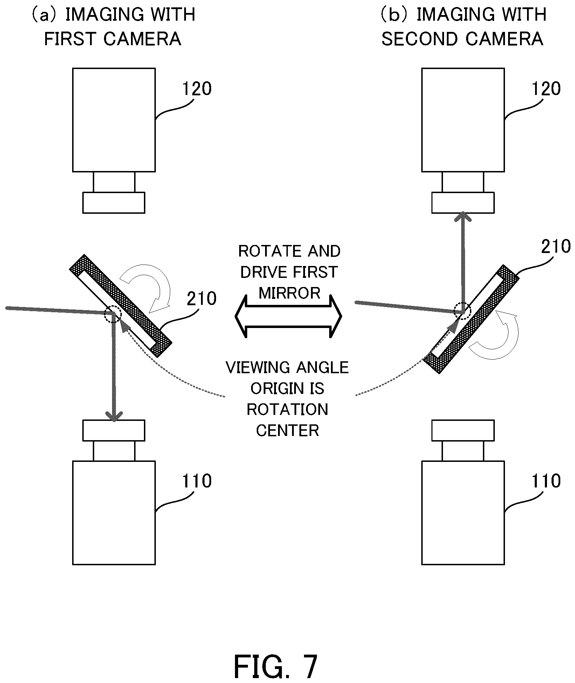

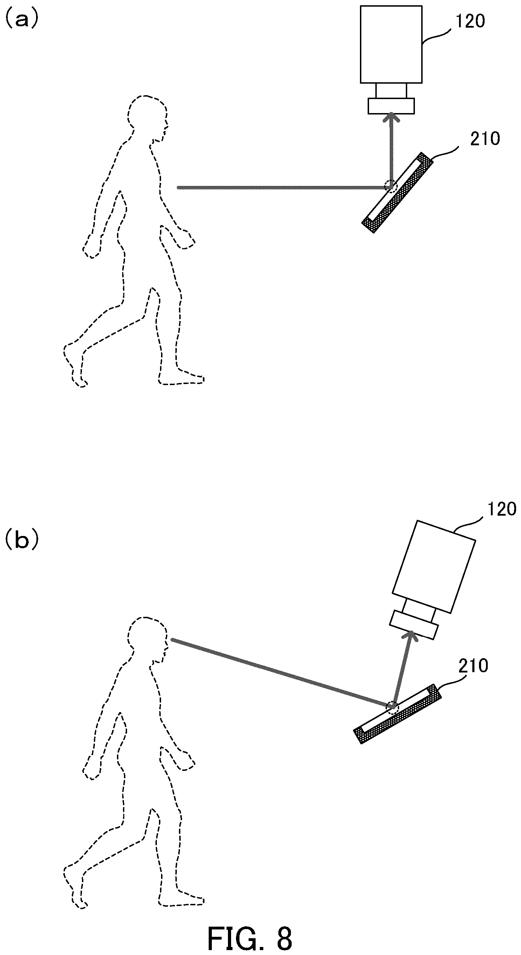

The imaging system 10 according to a third example embodiment will be described with reference to FIG. 7 and FIG. 8. The third example embodiment is partially different from the first and second example embodiments only in the configuration and operation, and may be the same as the first and second example embodiments in the other parts. For this reason, a part that is different from each of the example embodiments described above will be described in detail below, and a description of the other overlapping parts will be omitted as appropriate.

### (Configuration and Operation of Imaging Unit)

First, with reference to FIG. 7, a configuration and operation of the imaging unit 18 in the imaging system 10 according to the third example embodiment will be described. FIG. 7 is a side view illustrating a rotation drive control of the first mirror by the imaging system according to the third example embodiment.

As illustrated in FIG. 7, in the imaging system 10 according to the third example embodiment, the first camera 110 and the second camera 120 are arranged to sandwich the first mirror 210 therebetween. In other words, the first camera 110 and the second camera 120 are arranged to face each other across the mirror. More specifically, the first camera 110 is disposed to be directed toward the first mirror 210 (i.e., directly above) from directly below. The second camera 120 is disposed to be directed toward the first mirror 210 (i.e., directly below) from directly above. The arrangement of the first camera 110, the second camera 120, and the first mirror 210 according to the present example embodiment, however, is not limited to this arrangement. For example, the first camera 110 and the second camera 120 may be arranged to sandwich the first mirror 210 in a lateral direction.

The first adjustment unit 310 according to the third example embodiment is configured to control the rotation drive of the first mirror 210. Then, the first mirror 210 is rotationally driven in response to an instruction of the first adjustment unit 310, and thus, the optical positional relation between the first camera 110 or the second camera 120 and the first mirror 210 is adjusted. The first mirror 210 may be rotationally driven by using a motor or the like, for example.

For example, when the mirror surface of the first mirror 210 is rotationally driven to be directed toward the first camera 110 (i.e., downward), light enters the first camera 110 through the first mirror 210. That is, the first camera 110 is ready to perform the imaging through the first mirror 210. Furthermore, when the mirror surface of the first mirror 210 is rotationally driven to be directed toward the second camera 120 (i.e., upward), light enters the second camera 120 through the first mirror 210. That is, the second camera 120 is ready to perform the imaging through the first mirror 210. In this case, by performing the rotation drive around the viewing angle origin located on the surface of the first mirror 210, the first camera 110 and the second camera 120 are capable of performing the imaging through common viewing angle origin.

### (Camera Arrangement Variations)

Next, with reference to FIG. 8, arrangement variations of the camera in the imaging system 10 according to the third example embodiment will be described. FIG. 8 is a side view illustrating the arrangement variations of the second camera.

As illustrated in FIG. 8, in the imaging system 10 according to the third example embodiment, the first camera 110 and the second camera 120 may be disposed diagonally. For example, in a case where the eye(s) of the target is to be imaged, when the second camera 120 is disposed facing directly below as illustrated in FIG. 8(a), the imaging range is in a relatively low position and the eye(s) of the target cannot be included in the imaging range. On the other hand, when the second camera 120 is disposed facing slightly diagonally as illustrated in FIG. 8(b), the imaging range is in a relatively high position and the eye(s) of the target can be included in the imaging range. In this way, it is possible to properly image the eye(s) of the target, for example, in a case where the target is tall or where the target is close or in similar cases. Although the arrangement of the second camera 120 is described here, the first camera 110 may be similarly disposed diagonally.

### (Technical Effect)

Next, a technical effect obtained by the imaging system 10 according to the third example embodiment will be described.

As described in FIG. 7 and FIG. 8, in the imaging system 10 according to the third example embodiment, the first mirror 210 disposed between the first camera 110 and the second camera 120 is rotationally driven, and thus, the optical positional relation between the first camera 110 or the second camera 120 and the first mirror 210 is adjusted. In this way, it is possible to adjust the optical positional relation between the first camera 110 or the second camera 120 and the first mirror 210, by a relatively simple drive operation. Furthermore, it is possible to adjust the optical positional relation, by moving only the first mirror 210 without moving the first camera 110 and the second camera 120.

### <Fourth Example Embodiment>

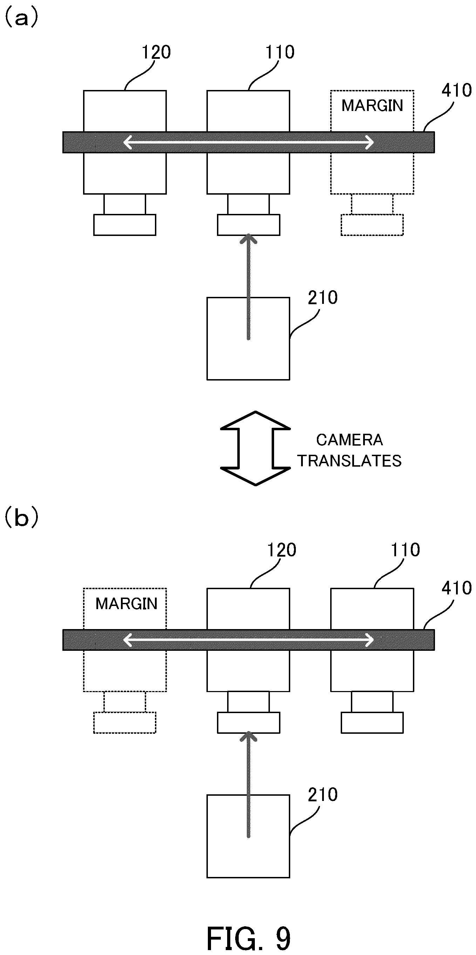

The imaging system 10 according to a fourth example embodiment will be described with reference to FIG. 9 to FIG. 11. The fourth example embodiment is partially different from the first to third example embodiments only in the configuration and operation, and may be the same as the first to third example embodiments in the other parts. For this reason, a part that is different from each of the example embodiments described above will be described in detail below, and a description of the other overlapping parts will be omitted as appropriate.

### (Parallel Moving Camera)

First, with reference to FIG. 9, a description will be given to a parallel moving camera that is an example of the imaging unit 18 in the imaging system 10 according to the fourth example embodiment. FIG. 9 is a front view illustrating an operation example of a drive unit that moves in parallel the first camera and the second camera.

As illustrated in FIG. 9, in the imaging unit 18 including parallel moving cameras, the first camera 110 and the second camera 120 are arranged side by side. Each of the first camera 110 and the second camera 120 is disposed to be directed downward. Then, the first mirror 210 is disposed below the first camera 110 and the second camera 120.

The first camera 110 and the second camera 120 are configured to be moved in parallel by a first drive unit 410. Note that the first camera 110 and the second camera 120 may not necessarily be movable completely in parallel. That is, "translating/parallel movement" herein is a broad concept that refers to a movement/displacement in a lateral direction in FIG. 9. Then, the first adjustment unit 310 is configured to be control the operation of the first drive unit 410. The first drive unit 410 moves in parallel the first camera 110 and the second camera 120 in response to an instruction of the first adjustment unit 310, and thus, the optical positional relation between the first camera 110 or the second camera 120 and the first mirror 210 is adjusted.

For example, in the state illustrated in FIG. 9(a), light enters the first camera 110 through the first mirror 210. That is, the first camera 110 is ready to perform the imaging. From this state, when the first camera 110 and the second camera 120 are moved in parallel toward a right margin (i.e., when the cameras are moved in parallel in a right direction in the drawing), the arrangement is as illustrated in FIG. 9(b). In the state illustrated in FIG. 9(b), light enters the second camera 120 through the first mirror 210. That is, the second camera 120 is ready to perform the imaging. From this state, when the first camera 110 and the second camera 120 are moved in parallel toward a left margin again (i.e., when the cameras are moved in parallel in a left direction in the drawing), the arrangement is again as illustrated in FIG. 9(a), and the first camera 110 is ready to perform the imaging.

### (Revolver Camera)

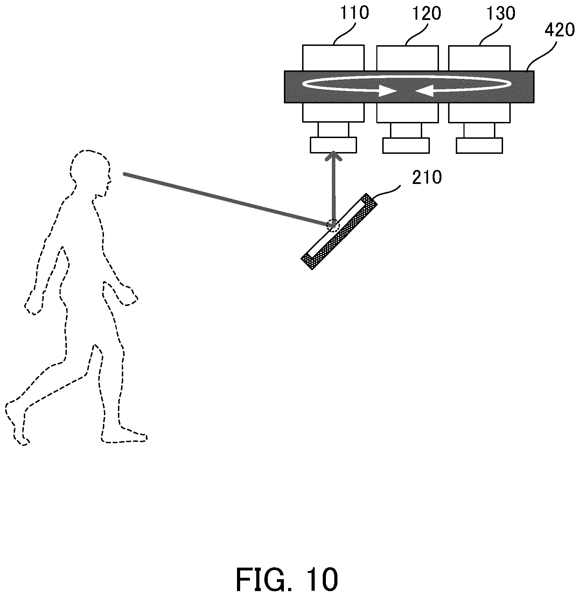

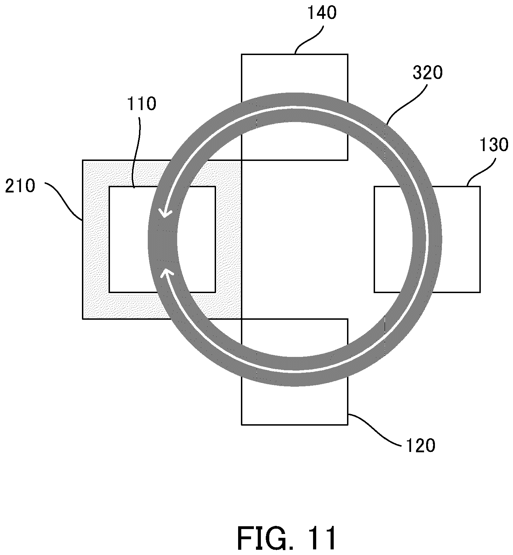

Next, with reference to FIG. 10 and FIG. 11, a description will be given to a revolver camera that is an example of the imaging unit 18 in the imaging system 10 according to the fourth example embodiment. FIG. 10 is a side view illustrating a configuration example of a drive unit that rotates and moves the first camera and the second camera. FIG. 11 is a top view illustrating a configuration example of the drive unit that rotates and moves the first camera and the second camera.

As illustrated in FIG. 10, in the imaging unit 18 including revolver cameras, the first camera 110 and the second camera 120 are arranged side by side. Here, cameras 130 and 140 that are different from the first camera 110 and the second camera 120 are also disposed. Although the camera 130 and the camera 140 are configured as cameras having different focal lengths from those of the first camera 110 and the second camera 120, the cameras 130 and 140 are not essential components. Each of the first camera 110 and the second camera 120 is disposed to be directed downward. Then, the first mirror 210 is disposed below the first camera 110 and the second camera 120.

As illustrated in FIG. 11, the first camera 110 and the second camera 120, and the different cameras 130 and 140, are arranged in an annular shape when viewed from above. Then, a second drive unit 420 of an annular shape is disposed to connect the cameras. The second drive unit 420 is configured to drive the first camera 110 and the second cameras 120 as well as the different cameras 130 and 140, in a revolver manner. Specifically, each of the cameras is configured to rotate and move to draw a circle, so that the positions thereof are switched clockwise or counterclockwise. Then, the first adjustment unit 310 is configured to control the operation of the second drive unit 420. The second drive unit 420 moves each camera in the revolver manner in response to an instruction of the first adjustment unit 310, and thus, the optical positional relation between the first camera 110 or the second camera 120 and the first mirror 210 is adjusted.

For example, in the state illustrated in FIG. 10 and FIG. 11, light enters the first camera 110 through the first mirror 210. That is, the first camera 110 is ready to perform the imaging. From this state, when the respective cameras are moved clockwise, the second camera 120 is disposed above the first mirror 210, and light enters the second camera 120 through the first mirror 210. That is, the second camera 120 is ready to perform the imaging. Similarly, when the cameras 130 and 140 are moved to be positioned above the first mirror 210, the cameras 130 and 140 are ready to perform the imaging.

### (Combination Examples of Cameras)

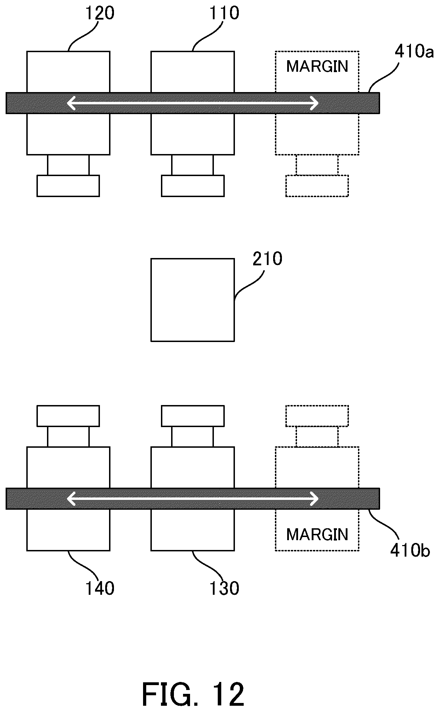

Next, with reference to FIG. 12 to FIG. 15, a description will be given of a configuration example in which the parallel moving camera(s) (see FIG. 9) and the revolver camera(s) (see FIG. 10 and FIG. 11) are combined. The following describes an example in which each of the cameras is disposed above and/or below the first mirror 210.

### (First Combination Example)

First, a first combination example will be described with reference to FIG. 12. FIG. 12 is a front view illustrating the first combination example of the cameras. In FIG. 12, the same components as those illustrated in FIG. 9 carry the same reference numerals.

As illustrated in FIG. 12, in the first combination example, the parallel moving cameras are disposed above and below the first mirror 210. Specifically, the first camera 110, the second camera 120, and a first drive unit 410a are disposed above the first mirror 210, and the third camera 130, the fourth camera 140, and a first drive unit 410b are disposed below the first mirror 210.

In the first combination example, for example, when the user approaches, the imaging may be performed in order of the first camera 110, the second camera 120, the third camera 130, and the fourth camera 140. Specifically, first, the first camera 110 may perform the imaging, and then, the second camera 120 may perform the imaging by allowing the first drive unit 410a to drive. Then, after driving the first mirror 210, the third camera 130 may perform the imaging, and then, the fourth camera 140 may perform the imaging by allowing the first drive unit 410b to drive.

### (Second Combination Example)

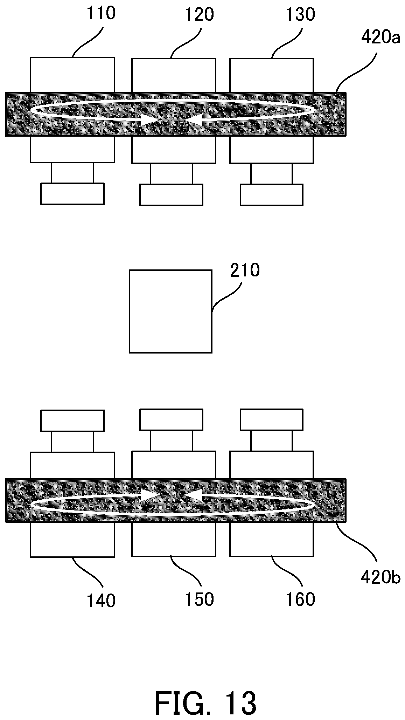

Next, a second combination example will be described with reference to FIG. 13. FIG. 13 is a front view illustrating the second combination example of the cameras. In FIG. 13, the same components as those illustrated in FIG. 10 carry the same reference numerals.

As illustrated in FIG. 13, in the second combination example, the revolver cameras are disposed above and below the first mirror 210. Specifically, the first camera 110, the second camera 120, the third camera 130, and a second drive unit 420a are disposed above the first mirror 210, and the fourth camera 140, a fifth camera 150, a sixth camera 160, and a second drive unit 420b are disposed below the first mirror 210.

In the second combination example, for example, when the user approaches, the imaging may be performed in order of the first camera 110, the second camera 120, the third camera 130, the fourth camera 140, the fifth camera 150, and the sixth camera 160. Specifically, first, the first camera 110 may perform the imaging, and then, the second camera 120 may perform the imaging by allowing the second drive unit 420a to drive, and then the third camera 130 may perform the imaging by allowing again the second drive unit 420a to drive. Then, after driving the first mirror 210, the fourth camera 140 may perform the imaging, and then, the fifth camera 150 may perform the imaging by allowing the second drive unit 420b to drive, and then, the sixth camera 160 may perform the imaging by allowing again the second drive unit 420b to drive.

### (Third Combination Example)

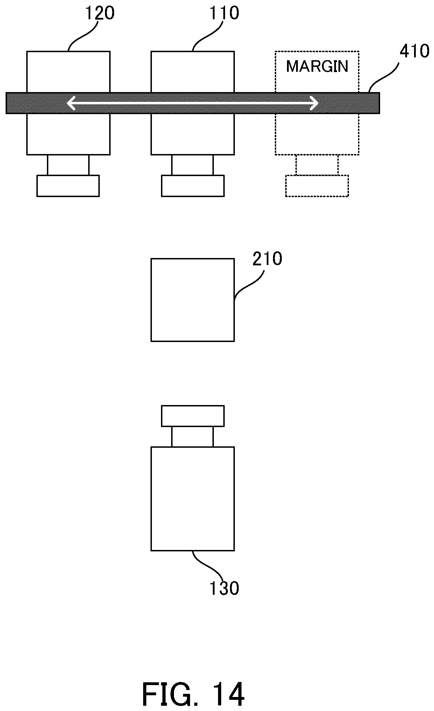

Next, a third combination example will be described with reference to FIG. 14. FIG. 14 is a front view illustrating the third combination example of the cameras. In FIG. 14, the same components as those illustrated in FIG. 9 carry the same reference numerals.

As illustrated in FIG. 14, in the third combination example, the parallel moving cameras are disposed above the first mirror 210, and a single normal camera is disposed below the first mirror 210. Specifically, the first camera 110, the second camera 120, and the first drive unit 410 are disposed above the first mirror 210, and the third camera 130 is disposed below the first mirror. The normal camera may be disposed above the first mirror 210, and the parallel moving cameras may be disposed below the first mirror 210. Furthermore, instead of the parallel moving cameras, the revolver cameras may be disposed. That is, the revolver cameras may be combined with the nomal camera.

In the third combination example, for example, when the user approaches, the imaging may be performed in order of the first camera 110, the second camera 120, and the third camera 130. Specifically, first, the first camera 110 may perform the imaging, and then, the second camera 120 may perform the imaging by allowing the first drive unit 410 to drive. Then, after driving the first mirror 210, the third camera 130 may perform the imaging.

### (Fourth Combination Example)

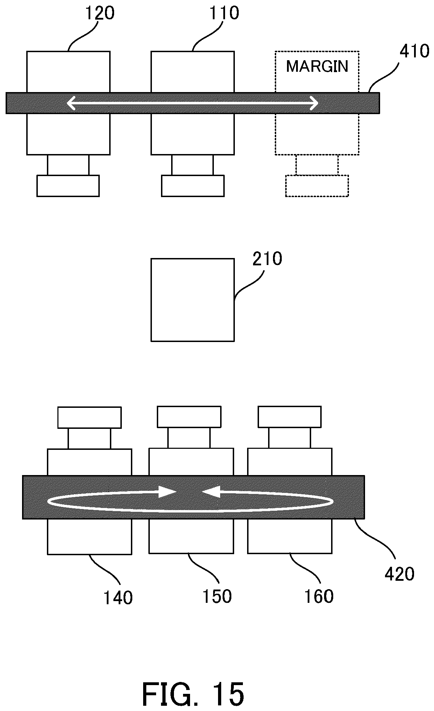

Next, with reference to FIG. 15, a fourth combination example will be described. FIG. 15 is a front view illustrating the fourth combination example of the cameras. In FIG. 15, the same components as those illustrated in FIG. 9 and FIG. 10 carry the same reference numerals.

As illustrated in FIG. 15, in the fourth combination example, the parallel moving cameras are disposed above the first mirror 210, and the revolver cameras are disposed below the first mirror 210. Specifically, the first camera 110, the second camera 120, and the first drive unit 420 are disposed above the first mirror 210, and the fourth camera 140, the fifth camera 150, the sixth camera 160, and the second drive unit 420 are disposed below the first mirror 210. The revolver cameras may be disposed above the first mirror 210, and the parallel moving cameras may be disposed below the first mirror 210.

In the fourth combination example, for example, when the user approaches, the imaging may be performed in order of the first camera 110, the second camera 120, the fourth camera 140, the fifth camera 150, and the sixth camera 160. Specifically, first, the first camera 110 may perform the imaging, and then, the second camera 120 may perform the imaging by allowing the first drive unit 420 to drive. Then, after driving the first mirror 210, the fourth camera 140 may perform the imaging, and then, the fifth camera 150 may perform the imaging by allowing the second drive unit 420 to drive, and then, the sixth camera 160 may perform the imaging by allowing again the second drive unit 420 to drive.

The combinations described in FIG. 12 to FIG. 15 are merely an example, and a technical effect according to the present example embodiment can be obtained even in other combinations.

### (Technical Effect)

Next, a technical effect obtained by the imaging system 10 according to the fourth example embodiment will be described.

As described in FIG. 9 to FIG. 11, in the imaging system 10 according to the fourth example embodiment, the optical positional relation between the first camera 110 or the second camera 120 and the first mirror 210 is adjusted by moving the first camera 110 and the second camera 120. In this way, it is possible to adjust the optical positional relation between the first camera 110 or the second camera 120 and the first mirror 210, by a relatively simple drive operation. Furthermore, it is possible to adjust the optical positional relation, by moving only the first camera 110 and the second camera 120 without moving the first mirror 210.

### <Fifth Example Embodiment>

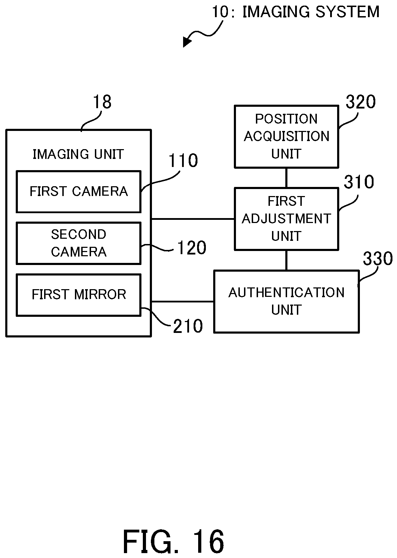

The imaging system 10 according to a fifth example embodiment will be described with reference to FIG. 16 to FIG. 18. The fifth example embodiment is partially different from the first to fourth example embodiments only in the configuration and operation, and may be the same as the first to fourth example embodiments in the other parts. For this reason, a part that is different from each of the example embodiments described above will be described in detail below, and a description of the other overlapping parts will be omitted as appropriate.

### (Functional Configuration)

First, with reference to FIG. 16, a functional configuration of the imaging system 10 according to the fifth example embodiment will be described. FIG. 16 is a block diagram illustrating the functional configuration of the imaging system according to the fifth example embodiment. In FIG. 16, the same components illustrated in FIG. 2 carry the same reference numerals.

As illustrated in FIG. 16, the imaging system 10 according to the fifth example embodiment includes, as components for realizing the functions thereof, the imaging unit 18, the first adjustment unit 310, a position acquisition unit 320, and an authentication unit 330. That is, the imaging system 10 according to the fifth example embodiment further includes the position acquisition unit 320 and the authentication unit 330, in addition to the configuration in the first example embodiment (see FIG. 2). Each of the position acquisition unit 320 and authentication unit 330 may be a processing block realized or implemented by the processor 11 (see FIG. 1), for example.

The position acquisition unit 320 is configured to obtain information about a position of the target imaged by the first camera 110 and the second camera 120. The position acquisition unit 320 may be configured to acquire the position of the target, by using a wide-angle camera that is different from the first camera 110 and the second camera 120. The position acquisition unit 320 may be configured to acquire the position of the target, by using a distance sensor, a passage sensor, a floor pressure sensor, or the like. The information about the position of the target obtained by the position acquisition unit 320 is used to determine which of the first camera 110 and the second camera 120 is used to image the target. The position acquisition unit 320 may be configured to have a function of performing this determination.

The authentication unit 330 is configured to perform authentication processing on the basis of the image of the target captured by the first camera 110 and the second camera 120. For example, the authentication unit 330 may be configured to perform face recognition by using the face image of the target. Alternatively, the authentication unit 330 may be configured to perform iris recognition by using the eye image (iris image) of the target. A detailed description of a specific method of the authentication processing is omitted here, as the existing technologies/techniques may be applied as appropriate.

### (Remote Authentication and Proximity Authentication)

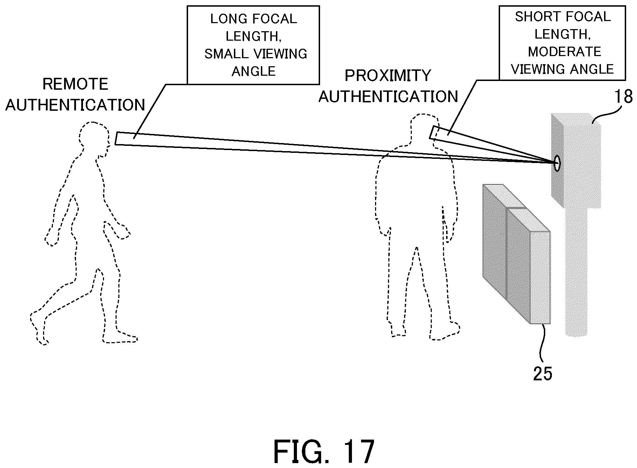

Next, with reference to FIG. 17, remote authentication and proximity authentication performed by the imaging system 10 according to the fifth example embodiment will be described. FIG. 16 is a conceptual diagram illustrating the remote authentication and the proximity authentication by the imaging system according to the fifth example embodiment.

As illustrated in FIG. 17, performed in the imaging system 10 according to the fifth example embodiment are "remote authentication" in which the authentication processing is performed by capturing the image of the target located relatively far from the imaging unit 18 and the gate 25, and "proximity/neighbor authentication" in which the authentication processing is performed by capturing the image of the target located relatively close to the imaging unit 18. The remote authentication and the proximity authentication may be performed by using a common modal. For example, both the remote authentication and the proximity authentication may be performed as the face recognition, or both the remote authentication and the proximity authentication may be performed as the iris recognition. The remote authentication and the proximity authentication may also be performed by using different modals. For example, the remote authentication may be performed as the face recognition, and the proximity authentication may be performed as the iris recognition. In the example illustrated in the drawing, when the remote authentication or the proximity authentication is successful, the gate 25 opens to permit the target to pass through.

The remote authentication is performed by imaging the target with the first camera 110 having the first focal length. In this case, the first camera 110 may be configured as a camera with a long focal length and a small viewing angle. The remote authentication may be performed in a case where the position of the target acquired by the position acquisition unit 320 is the first focal length (i.e., the focal length of the first camera 110). The remote authentication may be performed, for example, by capturing the image of the target walking toward the imaging unit 18.

The proximity authentication is performed by imaging the target with the second camara 120 having the second focal length. In this case, the second camera 120 may be configured as a camera with a short focal length and a moderate viewing angle. The proximity authentication may be performed in a case where the position of the target acquired by the position acquisition unit 320 is the second focal length (i.e., the focal length of the second camera 120). The proximity authentication may be performed, for example, by capturing the image of the target standing near the imaging unit 18 (i.e., in front of the gate 25).

### (Flow of Operation)

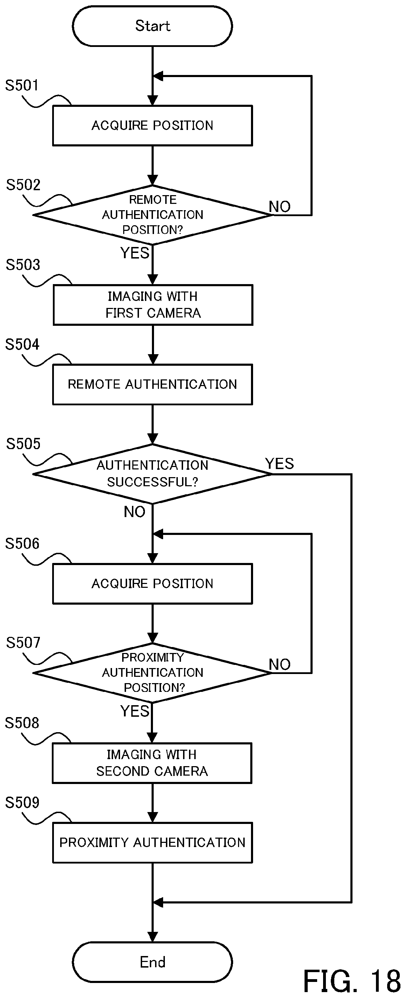

Next, with reference to FIG. 18, a flow of an authentication operation by the imaging system 10 according to the fifth example embodiment (i.e., an operation of performing the biometric authentication by using the captured image) will be described. FIG. 18 is a flowchart illustrating the flow of the authentication operation of the imaging system according to the fifth example embodiment.

As illustrated in FIG. 18, when the authentication operation by the imaging system 10 according to the fifth example embodiment is started, first, the position acquisition unit 320 acquires the position of the target (step S501). Then, the position acquisition unit 320 determines whether or not the acquired position of the target is a remote authentication position (i.e., a position at which the remote authentication is to be performed) (step S502). The remote authentication position may be set in accordance with the first focal length.

When the acquired position of the target is not the remote authentication position (the step S502: NO), the step S501 is performed again. On the other hand, the acquired position of the target is the remote authentication position (the step S502: YES), the first adjustment unit 310 adjusts the optical positional relation such that the first camera 110 is allowed to image the target, and the first camera 110 captures the image of the target (step S503). Then, the authentication unit 330 performs the remote authentication by using the image captured by the first camera 110 (step S504).

Subsequently, the authentication unit 330 determines whether or not the remote authentication is successful (step S505). When the remote authentication is successful (the step S505: YES), the subsequent steps may be omitted. That is, the passage of the target may be permitted without the proximity authentication being performed.

On the other hand, when the remote authentication is failed (the step S505: NO), the position acquisition unit 320 acquires the position of the target (step S506). Then, the position acquisition unit 320 determines whether or not the acquired position of the target is a proximity authentication position (i.e., a position at which the proximity authentication is to be performed) (step S507). The proximity authentication position may be set in accordance with the second focal length.

When the acquired position of the target is not the proximity authentication position (the step S507: NO), the step S506 is performed again. On the other hand, when the acquired position of the target is the proximity authentication position (the step S507: YES), the first adjustment unit 310 adjusts the optical positional relation such that the second camera 120 is allowed to image the target, and the second camera 120 captures the image of the target (step S508). Then, the authentication unit 330 performs the proximity authentication by using the image captured by the second camera 120 (step S509).

When the proximity authentication is successful, the target may be allowed to pass through. On the other hand, when the proximity authentication is failed, the target may be prohibited from passing through. Furthermore, a series of operation steps up to this point may be repeated at each time when a new target appears. For example, in a case where the authentication of a first target is successful, the processing from the step S501 may be performed on a subsequent second target. In this way, in a case where the processing is performed on different targets in a row, processing of returning to a state where the first camera 110 is capable of performing the imaging again after the series of operation steps is ended, may be performed. That is, the processing may be performed to return the positional relation that is adjusted to image the first target with the second camera 120, to the positional relation that is adjusted for the first camera 110 to immediately image the subsequent second target with the first camera 110. Such adjustment of the positional relation may be performed immediately after the first target is captured by the second camera 120, or may be performed after the subsequent second target is actually detected. In a case where the adjustment of the positional relation is realized by the rotation of the first mirror 210, a rotation direction of the first mirror 210 for the aligned positional relation to the first camera 110 may be configured to be the same as a rotation direction of the first mirror 210 for allowing the positional relation adjusted for the second camera 120. For example, let us assume that after the imaging is performed by the first camera 110, the first mirror 210 is rotated counterclockwise when the imaging is performed by the second camera 120. In this case, after the imaging is performed by the second camera 120, when the imaging is performed again by the first camera 110, the first mirror 210 may be allowed to perform one counterclockwise rotation without rotating clockwise (i.e., without reverse rotation). In this way, it is possible to suppress/reduce a load or the like when changing the rotation direction of the mirror, and it is thus possible to suppress/reduce deterioration of a motor or the like.

### (Technical Effect)

Next, a technical effect obtained by the imaging system 10 according to the fifth example embodiment will be described.

As described in FIG. 16 to FIG. 18, in the imaging system 10 according to the fifth example embodiment, first, the remote authentication is first performed by using the first camera 110, and in a case where the remote authentication is failed, the proximity authentication is performed by using the second camera 120. In this way, it is possible to properly perform the authentication processing using the first camera 110 and the second camera 120 (specifically, the authentication processing for targets located at differing distances).

### <Sixth Example Embodiment>

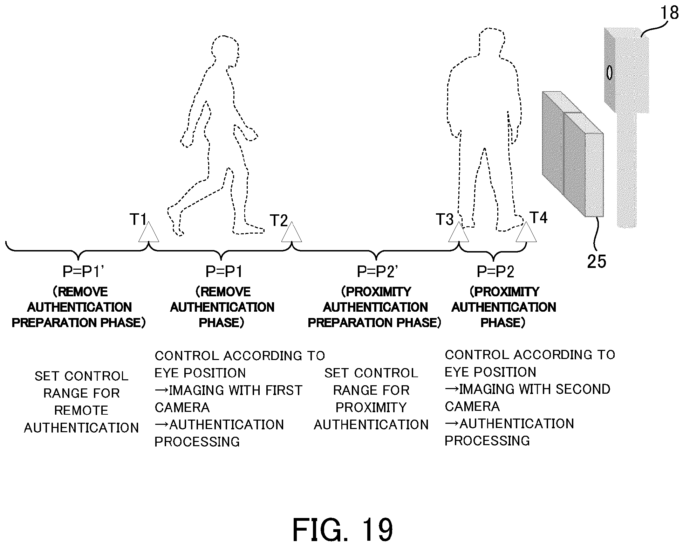

The imaging system 10 according to a sixth example embodiment will be described with reference to FIG. 19. The sixth example embodiment is partially different from the first to fifth example embodiments only in the configuration and operation, and may be the same as the first to fifth example embodiments in the other parts. For this reason, a part that is different from each of the example embodiments described above will be described in detail below, and a description of the other overlapping parts will be omitted as appropriate.

### (Processing in Each Phase)

First, with reference to FIG. 19, processing corresponding to a plurality of phases performed by the imaging system 10 according to the sixth example embodiment will be described. FIG. 19 is a conceptual diagram illustrating each phase and processing content in the imaging system according to the sixth example embodiment.

In the imaging system 10 according to the sixth example embodiment, the imaging by the first camera 110 and the second camera 120 is performed, in accordance with a plurality of phases set in advance depending on the position of the target, or a situation. The phase may be determined by whether or not the position of the target is a preset length, for example. Alternatively, the phase may be determined by whether the target is walking or standing. The following describes an example in which the phase is determined by using a distance and the eye(s) of the target are imaged to perform the iris authentication.

As illustrated in FIG. 19, when the target is located at a position far from the imaging unit 18 and the gate 25 (specifically, at a position P=P1' farther than a trigger T1 when viewed from the imaging unit 18), it is determined to be a remote authentication preparation phase. In the remote authentication preparation phase, a control range by the first adjustment unit 310 is set for the remote authentication. Specifically, it is set to a control range when the first camera 110 performs the imaging. Thereafter, when the target slightly approaches the imaging unit 18 and the gate 25 (specifically, at a position P=P1 between the triggers T1 and T2), it is determined to be a remote authentication phase. In the remote authentication phase, the optical positional relation between the first camera 110 and the first mirror 210 is adjusted in accordance with an eye position of the target, and the imaging by the first camera 110 is performed. Then, the iris recognition (remote authentication) is performed by using the eye image captured by the first camera 110.

Subsequently, when the target approaches the imaging unit 18 and the gate 25 (specifically, at a position P=P2' between the triggers T2 and T3), it is determined to be a proximity authentication preparation phase. In the proximity authentication preparation phase, the control range by the first adjustment unit 310 is set for the proximity authentication. Specifically, it is set to a control range when the second camera 120 performs the imaging. Thereafter, when the target further approaches the imaging unit 18 and the gate 25 (specifically, at a position P=P2 between the triggers T3 and T4), it is determined to be a proximity authentication phase. In the proximity authentication phase, the optical positional relation between the second camera 120 and the first mirror 210 is adjusted in accordance with the eye position of the target, and the imaging by the second camera 120 is performed. Then, the iris authentication (proximity authentication) is performed by using the eye image captured by the second camera 120.

### (Technical Effect)

Next, a technical effect obtained by the imaging system 10 according to the sixth example embodiment will be described.

As described in FIG. 19, in the imaging system 10 according to the sixth example embodiment, the imaging by the first camera 110 and the second camera 120 is performed in accordance with the determined phase. In this way, it is possible to adjust the optical positional relation between the first camera 110 or the second camera 120 and the first mirror 210 in appropriate timing. Consequently, it is possible to capture the image of the target in appropriate timing.

### <Seventh Example Embodiment>

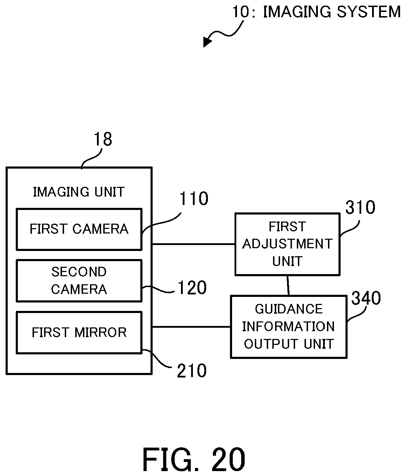

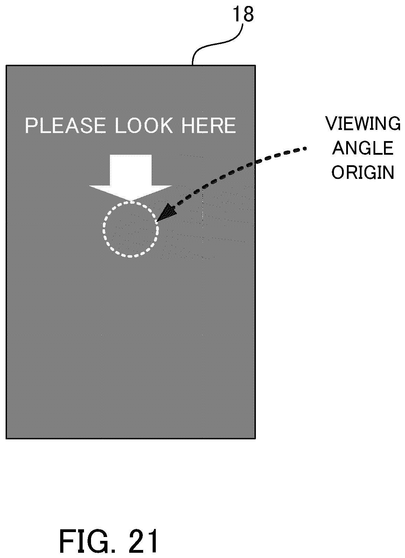

The imaging system 10 according to a seventh example embodiment will be described with reference to FIG. 20 and FIG. 21. The seventh example embodiment is partially different from the first to sixth example embodiments only in the configuration and operation, and may be the same as the first to sixth example embodiments in the other parts. For this reason, a part that is different from each of the example embodiments described above will be described in detail below, and a description of the other overlapping parts will be omitted as appropriate.

### (Functional Configuration)

First, with reference to FIG. 20, a functional configuration of the imaging system 10 according to the seventh example embodiment will be described. FIG. 20 is a block diagram illustrating the functional configuration of the imaging system according to the seventh example embodiment. In FIG. 20, the same components illustrated in FIG. 2 carry the same reference numerals.

As illustrated in FIG. 20, the imaging system 10 according to the seventh example embodiment includes, as components for realizing the functions thereof, the imaging unit 18, the first adjustment unit 310, and a guidance information output unit 340. That is, the imaging system 10 according to the seventh example embodiment further includes the guidance information output unit 340 in addition to the configuration in the first example embodiment (see FIG. 2). The guidance information output unit 340 may be a processing block realized or implemented by the processor 11 (see FIG. 1), for example.

The guidance information output unit 340 is configured to output guidance information for guiding the line of sight of the target to the common viewing angle origin of the first camera 110 and the second camera 120. The guidance information may be displayed by using a display or projection, for example. In this case, the guidance information may be directly displayed at a point of the viewing angle origin (i.e., the intersection between the optical axis of each of the first camera 110 and the second camera 120, and the mirror surface of the first mirror 210), or may be displayed at its peripheral position or at a point in a direction of the viewing angle origin when viewed from the target. Alternatively, the guidance information may be outputted as audio information through a speaker or the like. In this case, the guidance information may be outputted such that target can hear a sound from the view angle origin.

### (Output Example of Guidance Information)

Next, with reference to FIG. 21, a specific example of the guidance information outputted in the imaging system 10 according to the seventh example embodiment. FIG. 21 is a front view illustrating an output example of the guidance information by the imaging system according to the seventh example embodiment.

As illustrated in FIG. 21, in the imaging system 10 according to the seventh example embodiment, an arrow indicating the position of the viewing angle origin (i.e., a mark) may be displayed. Furthermore, a message may also be displayed to have the target look at the viewing angle origin. That is, a message such as "Please look here" may be displayed as illustrated in the drawing. These kinds of guidance display/indication may also be highlighted. For example, the guidance display/indication may blink/flash, or a color thereof may change.

In the example illustrated in FIG. 21, since the imaging in the near infrared is assumed, a visible light cut panel is disposed on the surface of the imaging unit 18. The visible light cut panel is configured as a panel that does not transmit visible light, but transmits near-infrared light. In this case, the guidance information may be displayed on the visible light cut panel. In the case of the imaging using the visible light, for example, an opening is provided on the surface of the imaging unit 18 to transmit the visible light, but in the case of using the near-infrared light, the opening is not provided. By not providing the opening, it is possible to guide the line of sight and perform the imaging without making the target aware of where the viewing angle origin is, but at the same time, it is hard to determine where the viewing angle origin is, visually. A technical effect of the present example embodiment described below will be significantly exhibited in such a case.

### (Technical Effect)

Next, a technical effect obtained by the imaging system 10 according to the seventh example embodiment will be described.

As described in FIG. 20 and FIG. 21, in the imaging system 10 according to the seventh example embodiment, the guidance information for guiding the line of sight of the targe to the viewing angle origin, is outputted. In this way, it is possible to guide the line of sight of the target to the viewing angle origin, and to properly capture the image of the eye(s) (iris) of the target.

### <Eighth Example Embodiment>

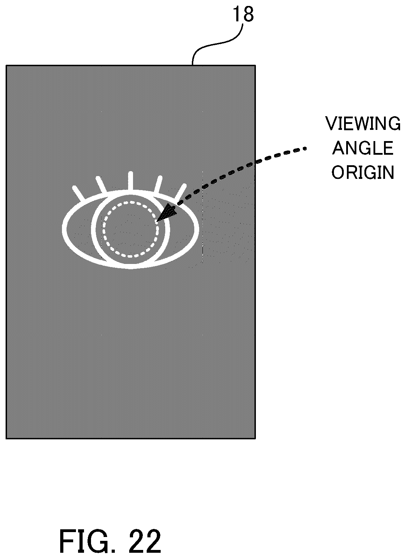

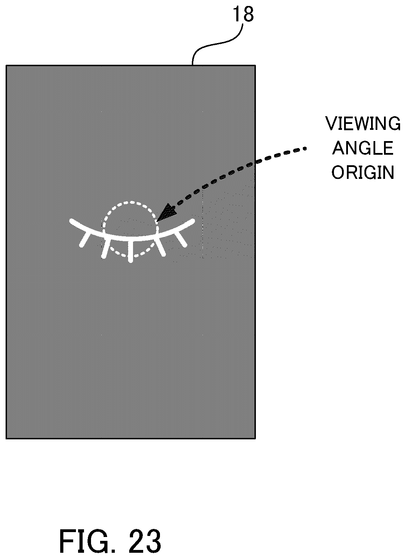

The imaging system 10 according to an eighth example embodiment will be described with reference to FIG. 22 and FIG. 23. The eighth example embodiment is partially different from the seventh example embodiment only in the operation, and may be the same as the first to seventh example embodiments in the other parts. For this reason, a part that is different from each of the example embodiments described above will be described in detail below, and a description of the other overlapping parts will be omitted as appropriate.

### (Output Example of Guidance Information)

First, with reference to FIG. 22 and FIG. 23, a specific example of the guidance information outputted in the imaging system 10 according to the eighth example embodiment will be described. FIG. 22 is a front view illustrating an output example of the guidance information corresponding to imaging timing in the imaging system according to the eighth example embodiment. FIG. 23 is a front view illustrating an output example of the guidance information corresponding to other than the imaging timing in the imaging system according to the eighth example embodiment.

As illustrated in FIG. 22 and FIG. 23, in the imaging system 10 according to the eighth example embodiment, an eye mark is displayed around the viewing angle origin, as the guidance information. The mark is displayed such that the eye is opened when the target is located at the first focal length (i.e., in the timing when the imaging of the target is to be performed with the first camera 110) and when the target is located at the second focal length (i.e., in the timing when the imaging of the target is to be performed with the second camera 120) (see FIG. 22). This open eye display aspect is to encourage the target to look at the viewing angle origin. Therefore, it is preferable that the open eye mark is displayed in a relatively conspicuous display aspect.

On the other hand, the mark is displayed such that the eye is closed when the target is not located at the first focal length nor the second focal length (i.e., in the timing when the imaging of the target is not performed by the first camera 110 nor the second camera 120) (see FIG. 23). This closed eye display aspect is to inform the target that it is not necessary to look at the viewing angle origin. Therefore, the closed eye mark may be displayed in a relatively inconspicuous manner than that of the open eye mark.

### (Technical Effect)

Next, a technical effect obtained by the imaging system 10 according to the eighth example embodiment will be described.

As described in FIG. 22 and FIG. 23, in the imaging system 10 according to the eighth example embodiment, the eye mark is displayed such that the eye is opened or closed depending on the situation. In this way, it is possible to guide the line of sight of the target, in accordance with the timing of imaging the eye(s) of the target with the first camera 110 and the second camera 120.

### <Ninth Example Embodiment>

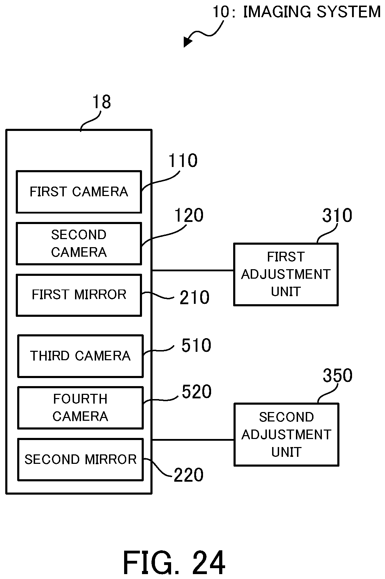

The imaging system 10 according to a ninth example embodiment will be described with reference to FIG. 24 to FIG. 26. The ninth example embodiment is partially different from the first to eighth example embodiments only in the configuration and operation, and may be the same as the first to eighth example embodiments in the other parts. For this reason, a part that is different from each of the example embodiments described above will be described in detail below, and a description of the other overlapping parts will be omitted as appropriate.

### (Functional Configuration)

First, with reference to FIG. 24, a functional configuration of the imaging system 10 according to the ninth example embodiment will be described. FIG.24 is a block diagram illustrating the functional configuration of the imaging system according to the ninth example embodiment. In FIG. 24, the same components illustrated in FIG. 2 carry the same reference numerals.

As illustrated in FIG. 24, the imaging system 10 according to the ninth example embodiment includes, as components for realizing the functions thereof, the imaging unit 18, the first adjustment unit 310, and a second adjustment unit 350. That is, the imaging system 10 according to the ninth example embodiment further includes the second adjustment unit 350 in addition to the configuration in the first example embodiment (see FIG. 2). The second adjustment unit 350 may be a processing block realized or implemented by the processor 11 (see FIG. 1), for example.

Furthermore, the imaging unit 18 according to the ninth example embodiment includes the first camera 110, the second camera 120, the first mirror 210, a third camera 510, a fourth camera 520, a second mirror 220. That is, the imaging unit 18 according to the ninth example embodiment further includes the third camera 510, the fourth camera 520, and the second mirror 220, in addition to the configuration in the first example embodiment (see FIG. 2).

The third camera 510 is provided as a camera for identifying the eye position of the target when the target is imaged by the first camera 110. The fourth camera 520 is provided as a camera for identifying the eye position of the target when the target is imaged by the second camera 120. Specifically, when the target is imaged by the first camera 110, the eye position of the target is identified from an image captured by the third camera 510, and the imaging is performed on the basis of the identified eye position of the target. Similarly, when the target is imaged by the second camera 120, the eye position of the target is identified from an image captured by the fourth camera 520, and the imaging is performed on the basis of the identified eye position of the target. A detailed description of a specific method of identifying the eye position of the target from the image is omitted here, as the existing technologies/techniques may be applied as appropriate.

The second mirror 220 is a mirror configured to reflect light used when the third camera 510 and the fourth camera 520 perform imaging. The second mirror 220 is disposed to correspond to both the third camera 510 and the fourth camera 520. That is, each of the third camera 510 and the fourth camera 520 is configured to image the target through the second mirror 220. Specifically, the third camera 510 performs the imaging by using light entering through the second mirror 220, and the fourth camera 520 also performs the imaging by using the light entering through the second mirror 220.

The second adjustment unit 350 is configured to adjust an optical positional relation between the third camera 510 or the fourth camera 520 and the second mirror 220. That is, the second adjustment unit 350 has the same function as that of the first adjustment unit 310 already described. More specifically, the second adjustment unit 350 adjusts the optical positional relation between the third camera 510 and the second mirror 220, when the imaging is performed by the third camera 510. As a result, the third camera 510 is ready to image the target. The second adjustment unit 350 adjusts the optical positional relation between the fourth camera 520 and the second mirror 220, when the imaging is performed by the fourth camera 520. As a result, the fourth camera 520 is ready to image the target. The second adjustment unit 350 may be configured to adjust the respective optical positional relation, for example, by driving at least one of the third camera 510, the fourth camera 520, and the second mirror 220 with a drive unit including an actuator or the like.

### (Configuration and Operation of Imaging Unit)

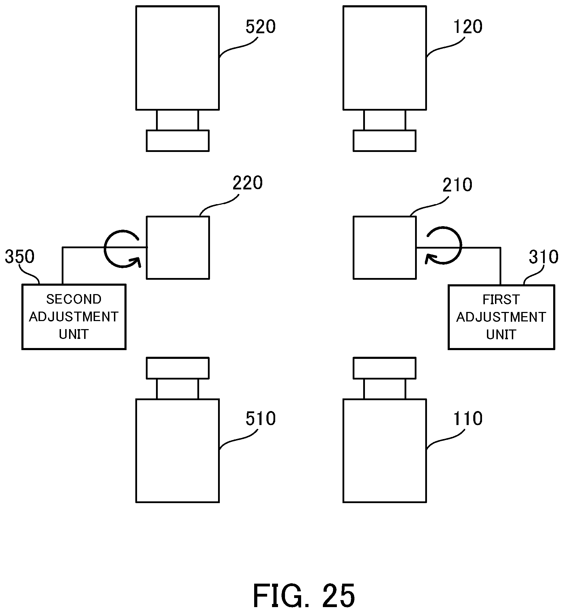

Next, with reference to FIG. 25, a configuration and operation of the imaging unit 18 in the imaging system 10 according to the ninth example embodiment will be described. FIG. 25 is a front view illustrating an arrangement example of the imaging system according to the ninth example embodiment.

As illustrated in FIG. 25, in the imaging unit 18 according to the ninth example embodiment, as described in the third example embodiment (see FIG. 7), the first camera 110 and the second camera 120 are arranged to sandwich the first mirror 210 therebetween. Then, the first mirror 210 is rotationally driven by the first adjustment unit 310, and thus, the optical positional relation between the first camera 110 or the second camera 120 and the first mirror 210 is adjusted. Furthermore, in the ninth example embodiment, the third camera 510, the fourth camera 520, and the second mirror 220 are respectively arranged alongside the first camera 110, the second camera 120, and the first mirror 210. The third camera 510 and the fourth camera 520 are arranged to sandwich the second mirror 220 therebetween. Then, the optical positional relation between the third camera 510 or the fourth camera 520 and the second mirror 220 is adjusted by the same operation as those of the first camera 110, the second camera 120, and the first mirror 210. Specifically, the second adjustment unit 350 is rotationally driven by the second mirror 220, and thus, the optical positional relation between the third camera 510 or the fourth camera 520 and the second mirror 220 is adjusted.

### (Flow of Operation)

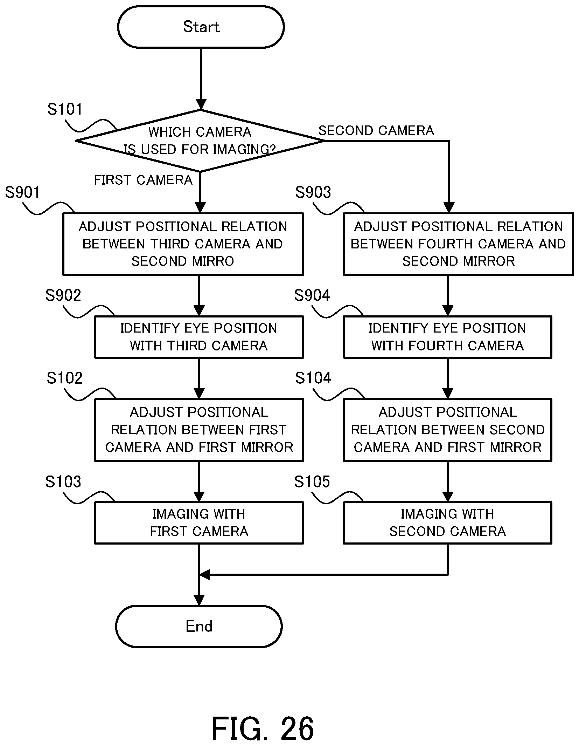

Next, with reference to FIG. 26, a flow of an imaging operation of the imaging system 10 according to the ninth example embodiment will be described. FIG. 26 is a flowchart illustrating the flow of the imaging operation of the imaging system according to the ninth example embodiment. In FIG. 26, the same steps as those illustrated in FIG. 3 carry the same reference numerals.

As illustrated in FIG. 26, when the imaging operation by the imaging system 10 according to the ninth example embodiment is started, first, the first adjustment unit 310 determines which of the first camera 110 and the second camera 120 is used to image the target (step S101). A determination result by the first adjustment unit 310 here is outputted to the second adjustment unit.

When it is determined that the first camera 110 is used for the imaging (the step S101: First camera), the second adjustment unit 350 adjusts the optical positional relation between the third camera 510 and the second mirror 220 (step S901). Then, while the optical positional relation is adjusted, the third camera 510 performs the imaging and identifies the eye position of the target from the image (step S902). Thereafter, the first adjustment unit 310 adjusts the optical positional relation between the first camera 110 and the first mirror 210 (step S102). Then, while the optical positional relation is adjusted, the first camera 110 performs the imaging (step S103).

On the other hand, when it is determined that the second camera 120 is used for the imaging (the step S101: Second camera), the second adjustment unit 350 adjusts the optical positional relation between the fourth camera 520 and the second mirror 220 (step S903). Then, while the optical positional relation is adjusted, the fourth camera 520 performs the imaging and identifies the eye position of the target from the image (step S902). Thereafter, the first adjustment unit 310 adjusts the optical positional relation between the second camera 120 and the first mirror 210 (step S104). Then, while the optical positional relation is adjusted, the second camera 120 performs the imaging (step S105).

### (Technical Effect)

Next, a technical effect obtained by the imaging system 10 according to the ninth example embodiment will be described.

As described in FIG. 24 to FIG. 26, in the imaging system 10 according to the ninth example embodiment, the eye position of the target is identified by using the third camera 510 and the fourth camera 520. Then, depending on which of the cameras is used for the imaging, the optical positional relation between the third camera 510 or the fourth camera 520 and the second mirror 220 is adjusted. In this way, each of the third camera 510 and fourth camera 520 is capable of performing the imaging through the second mirror 220. In other words, it is possible to capture the image for identifying the eye position of the target, through the common mirror.

### <Tenth Example Embodiment>

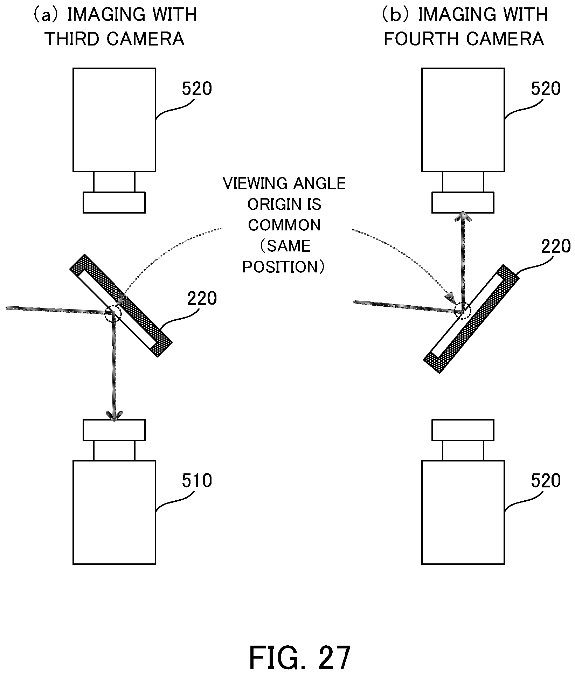

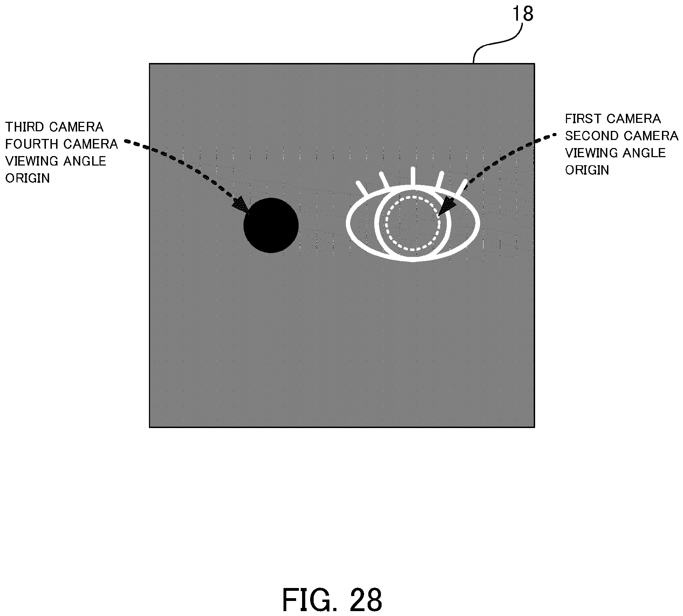

The imaging system 10 according to a tenth example embodiment will be described with reference to FIG. 27 and FIG. 28. The tenth example embodiment is partially different from the ninth example embodiment only in the configuration and operation, and may be the same as the first to ninth example embodiments in the other parts. For this reason, a part that is different from each of the example embodiments described above will be described in detail below, and a description of the other overlapping parts will be omitted as appropriate.

### (Viewing Angle Origin)

First, with reference to FIG. 27 and FIG. 28, a viewing angle origin in the imaging system according to the tenth example embodiment will be described. FIG. 27 is a side view illustrating the viewing angle origin of the third camera and the fourth camera in the imaging system according to the tenth example embodiment. FIG. 28 is a front view illustrating the viewing angle origin of each camera in the imaging system according to the tenth example embodiment.

As illustrated in FIG. 27, in the imaging system 10 according to the tenth example embodiment, the second mirror 220 is disposed between the third camera 510 and the fourth camera 520. Then, when the imaging is performed by the third camera 510, the second mirror 220 is directed toward the third camera 510, and light enters the third camera 510 through the second mirror 220 (see FIG. 27(a)). On the other hand, when the imaging is performed by the fourth camera 520, the second mirror 220 is directed toward the fourth camera 520 and light enters the fourth camera 520 through the second mirror 220 (see FIG. 27(b)).

Here, in both cases where the imaging is performed by the third camera 520 and where the imaging is performed by the fourth camera 520, the intersection between the optical axis of each camera and the mirror surface of the second mirror 220 is a common position. For example, in a case of rotating (changing an angle of) the second mirror 220 as illustrated, a position on the mirror surface serving as a rotation center is the viewing angle origin that is common to the both cameras.

As already described in FIG. 25, the first camera 110, the second camera 120, and the first mirror 210, and the third camera 510, the fourth camera 520, and the second mirror 220 are arranged side by side when viewed from the front, the viewing angle origins of the respective cameras are also arranged side by side. That is, as illustrated in FIG. 28, the common viewing angle origin of the first camera 110 and the second camera 120, and the common viewing angle origin of the third camera 510 and the fourth camera 520, are arranged side by side. Since the third camera 510 and the fourth camera 520 are cameras that captures the images for identifying the eye position, they capture the images by typically using the visible light. Therefore, unlike the viewing angle origin of the first camera 110 and the second camera 120, an opening is provided in the viewing angle origin of the third camera 510 and the fourth camera 520.

### (Technical Effect)

Next, a technical effect obtained by the imaging system 10 according to the tenth example embodiment will be described.

As described in FIG. 27 and FIG. 28, in the imaging system 10 according to the tenth example embodiment, the third camera 510 and the fourth camera 520 perform the imaging through the common viewing angle origin. In this way, it is possible to make a common path for guiding the light to the third camera 510 and fourth camera 520, and it is thus possible to simplify the configuration of the imaging unit 18. In addition, for example, in a case where it is required to guide the line of sight to image the eye(s) of the target, it is sufficient to guide the line of sight with respect to the common one viewing angle origin even in a situation where the imaging is performed by any one of the third camera 510 and fourth camera 520.

A processing method that is executed on a computer by recording, on a recording medium, a program for allowing the configuration in each of the example embodiments to be operated so as to realize the functions in each example embodiment, and by reading, as a code, the program recorded on the recording medium, is also included in the scope of each of the example embodiments. That is, a computer-readable recording medium is also included in the range of each of the example embodiments. Not only the recording medium on which the above-described program is recorded, but also the program itself is also included in each example embodiment.

The recording medium to use may be, for example, a floppy disk (registered trademark), a hard disk, an optical disk, a magneto-optical disk, a CD-ROM, a magnetic tape, a nonvolatile memory card, or a ROM. Furthermore, not only the program that is recorded on the recording medium and that executes processing alone, but also the program that operates on an OS and that executes processing in cooperation with the functions of expansion boards and another software, is also included in the scope of each of the example embodiments. In addition, the program itself may be stored in a server, and a part or all of the program may be downloaded from the server to a user terminal.

### <Supplementary Notes>

The example embodiments described above may be further described as, but not limited to, the following Supplementary Notes below.

### (Supplementary Note 1)

An imaging system according to Supplementary Note 1 is an imaging system including: a first camera with a first focal length; a second camera with a second focal length; a first mirror disposed to correspond to both the first camera and the second camera; and a first adjustment unit that adjusts an optical positional relation between the first camera or the second camera and the first mirror, in accordance with which of the first camera and the second camera is used to image a target.

### (Supplementary Note 2)

An imaging system according to Supplementary Note 2 is the imaging system according to Supplementary Note 1, wherein the first camera and the second camera perform imaging through a first common viewing angle origin that is common to the first and second cameras.

### (Supplementary Note 3)

An imaging system according to Supplementary Note 3 is the imaging system according to Supplementary Note 1 or 2, wherein the first camera and the second camera are arranged to face each other across the first mirror, and the first adjustment unit adjusts the optical positional relation between the first camera or the second camera and the first mirror, by rotating the first mirror.

### (Supplementary Note 4)

An imaging system according to Supplementary Note 4 is the imaging system according to Supplementary Note 1 or 2, wherein the first adjustment unit adjusts the optical positional relation between the first camera or the second camera and the first mirror, by moving the first camera and the second camera.

### (Supplementary Note 5)

An imaging system according to Supplementary Note 5 is the imaging system according to any one of Supplementary Notes 1 to 4, further including: a position acquiring unit that acquires a position of the target; an authentication unit that performs authentication processing by using an image of the target captured by the first camera and the second camera; a first control unit that performs control such that a first image is captured by the first camera to perform the authentication processing, in a case where the position of the target is a position corresponding to the first focal length; and a second control unit that performs control such that a second image is captured by the second camera to perform the authentication processing by imaging after the position of the target is a position corresponding to the second focal length, in a case where the authentication processing by the first image is failed.

### (Supplementary Note 6)

An imaging system according to Supplementary Note 6 is the imaging system according to any one of Supplementary Notes 1 to 5, wherein the first adjustment unit adjusts the optical positional relation between the first camera or the second camera and the first mirror, in accordance with a plurality of phases that are set in advance depending on a position of the target, or a situation.

### (Supplementary Note 7)

An imaging system according to Supplementary Note 7 is the imaging system according to any one of Supplementary Notes 2 to 6, further including a guidance information output unit that outputs information for guiding a line of sight of the target to the first viewing angle origin, in a case where the target is imaged by the first camera and the second camera.

### (Supplementary Note 8)

An imaging system according to Supplementary Note 8 is the imaging system according to Supplementary Note 7, wherein the guidance information output unit displays an image about an eye around the first viewing angle origin, and controls display such that the eye is opened when the target is located at the first focal length and the second focal length, and such that the eye is closed when the target is not located at the first focal length nor the second focal length.

### (Supplementary Note 9)

An imaging system according to Supplementary Note 9 is the imaging system according to any one of Supplementary Notes 1 to 8, further including: a third camera that captures an image for identifying an eye position of the target when the target is imaged by the first camera; a fourth camera that captures an image for identifying an eye position of the target when the target is imaged by the second camera; a second mirror disposed to correspond to both the third camera and the fourth camera; and a second adjustment unit that adjusts an optical positional relation between the third camera or the fourth camera and the second mirror, in accordance with which of the third camera and the fourth camera is used to image the target.

### (Supplementary Note 10)

An imaging system according to Supplementary Note 10 is the imaging system according to Supplementary Note 9, wherein the third camera and the fourth camera perform imaging via a second viewing angle origin that is common to the third and fourth cameras.

### (Supplementary Note 11)

An imaging apparatus according to Supplementary Note 11 is an imaging apparatus including: a first camera with a first focal length; a second camera with a second focal length; a first mirror disposed to correspond to both the first camera and the second camera; and a first adjustment unit that adjusts an optical positional relation between the first camera or the second camera and the first mirror, in accordance with which of the first camera and the second camera is used to image a target.

### (Supplementary Note 12)

An imaging method according to Supplementary Note 12 is an imaging method that is executed by at least one computer, the imaging method controlling an imaging system including: a first camera with a first focal length; a second camera with a second focal length; and a first mirror disposed to correspond to both the first camera and the second camera, the imaging method including: adjusting an optical positional relation between the first camera or the second camera and the first mirror, in accordance with which of the first camera and the second camera is used to image a target.

### (Supplementary Note 13)

A recording medium according to Supplementary Note 13 is a recording medium on which a computer program that allows at least one computer to execute an imaging method is recorded, the imaging method controlling an imaging system including: a first camera with a first focal length; a second camera with a second focal length; and a first mirror disposed to correspond to both the first camera and the second camera, the imaging method including: adjusting an optical positional relation between the first camera or the second camera and the first mirror, in accordance with which of the first camera and the second camera is used to image a target.

### (Supplementary Note 14)

A computer program according to Supplementary Note 14 is a computer program that allows at least one computer to execute an imaging method, the imaging method controlling an imaging system including: a first camera with a first focal length; a second camera with a second focal length; and a first mirror disposed to correspond to both the first camera and the second camera, the imaging method including: adjusting an optical positional relation between the first camera or the second camera and the first mirror, in accordance with which of the first camera and the second camera is used to image a target.

This disclosure is not limited to the examples described above and is allowed to be changed, if desired, without departing from the essence or spirit of this disclosure which can be read from the claims and the entire specification. An imaging system, an imaging apparatus, an imaging method, and a recording medium with such changes are also intended to be within the technical scope of this disclosure.

### Description of Reference Codes

10 Imaging system
11 Processor
18 Imaging unit
25 Gate
110 First camera
120 Second camera
210 First mirror
220 Second mirror
310 First adjustment unit
315 Target detection unit
320 Position acquisition unit
330 Authentication unit
340 Guidance information output unit
350 Second adjustment unit
410 First drive unit
420 Second drive unit
510 Third camera
520 Fourth camera

## Claims

1. An imaging system comprising:
a first camera with a first focal length;
a second camera with a second focal length;
a first mirror disposed to correspond to both the first camera and the second camera; and
a first adjustment unit that adjusts an optical positional relation between the first camera or the second camera and the first mirror, in accordance with which of the first camera and the second camera is used to image a target.

2. The imaging system according to claim 1, wherein the first camera and the second camera perform imaging through a first common viewing angle origin that is common to the first and second cameras.

3. The imaging system according to claim 1 or 2, wherein
the first camera and the second camera are arranged to face each other across the first mirror, and
the first adjustment unit adjusts the optical positional relation between the first camera or the second camera and the first mirror, by rotating the first mirror.

4. The imaging system according to claim 1 or 2, wherein the first adjustment unit adjusts the optical positional relation between the first camera or the second camera and the first mirror, by moving the first camera and the second camera.

5. The imaging system according to any one of claims 1 to 4, further comprising:
a position acquiring unit that acquires a position of the target;
an authentication unit that performs authentication processing by using an image of the target captured by the first camera and the second camera;
a first control unit that performs control such that a first image is captured by the first camera to perform the authentication processing, in a case where the position of the target is a position corresponding to the first focal length; and
a second control unit that performs control such that a second image is captured by the second camera to perform the authentication processing by imaging after the position of the target is a position corresponding to the second focal length, in a case where the authentication processing by the first image is failed.

6. The imaging system according to any one of claims 1 to 5, wherein the first adjustment unit adjusts the optical positional relation between the first camera or the second camera and the first mirror, in accordance with a plurality of phases that are set in advance depending on a position of the target, or a situation.

7. The imaging system according to any one of claims 2 to 6, further comprising a guidance information output unit that outputs information for guiding a line of sight of the target to the first viewing angle origin, in a case where the target is imaged by the first camera and the second camera.

8. The imaging system according to claim 7, wherein the guidance information output unit displays an image about an eye around the first viewing angle origin, and controls display such that the eye is opened when the target is located at the first focal length and the second focal length, and such that the eye is closed when the target is not located at the first focal length nor the second focal length.

9. The imaging system according to any one of claims 1 to 8, further comprising:
a third camera that captures an image for identifying an eye position of the target when the target is imaged by the first camera;
a fourth camera that captures an image for identifying an eye position of the target when the target is imaged by the second camera;
a second mirror disposed to correspond to both the third camera and the fourth camera; and
a second adjustment unit that adjusts an optical positional relation between the third camera or the fourth camera and the second mirror, in accordance with which of the third camera and the fourth camera is used to image the target.

10. The imaging system according to claim 9, wherein the third camera and the fourth camera perform imaging via a second viewing angle origin that is common to the third and fourth cameras.

11. An imaging apparatus comprising:
a first camera with a first focal length;
a second camera with a second focal length;
a first mirror disposed to correspond to both the first camera and the second camera; and
a first adjustment unit that adjusts an optical positional relation between the first camera or the second camera and the first mirror, in accordance with which of the first camera and the second camera is used to image a target.

12. An imaging method that is executed by at least one computer, the imaging method controlling an imaging system including: a first camera with a first focal length; a second camera with a second focal length; and a first mirror disposed to correspond to both the first camera and the second camera, the imaging method comprising:
adjusting an optical positional relation between the first camera or the second camera and the first mirror, in accordance with which of the first camera and the second camera is used to image a target.

13. A recording medium on which a computer program that allows at least one computer to execute an imaging method is recorded, the imaging method controlling an imaging system including: a first camera with a first focal length; a second camera with a second focal length; and a first mirror disposed to correspond to both the first camera and the second camera, the imaging method including:
adjusting an optical positional relation between the first camera or the second camera and the first mirror, in accordance with which of the first camera and the second camera is used to image a target.
